(19) Europäisches Patentamt

European Patent Office

Office européen des brevets

(11) EP 0 612 401 B1

(12) **EUROPEAN PATENT SPECIFICATION**

(45) Date of publication and mention
of the grant of the patent:
**09.07.1997 Bulletin 1997/28**

(21) Application number: **92921305.6**

(22) Date of filing: **09.10.1992**

(51) Int Cl.6: **G01L 3/24**, G01L 3/26,
F04B 51/00

(86) International application number:
**PCT/GB92/01849**

(87) International publication number:
**WO 93/07456 (15.04.1993 Gazette 1993/10)**

(54) **PUMP TESTING**

PUMPENÜBERPRÜFUNG

VERIFICATION D'UNE POMPE

(84) Designated Contracting States:
**DE DK FR GB SE**

(30) Priority: **09.10.1991 GB 9121409**

(43) Date of publication of application:
**31.08.1994 Bulletin 1994/35**

(73) Proprietor: **SOUTH WEST WATER SERVICES
LIMITED
Exeter, EX2 7HR (GB)**

(72) Inventors:
• **HARDING, Paul, Richard
Exeter EX2 8UT (GB)**
• **BURGESS, Alan 2 Freelands Close
Devon EX8 4AE (GB)**

(74) Representative: **Burke, Steven David et al
R.G.C. Jenkins & Co.
26 Caxton Street
London SW1H 0RJ (GB)**

(56) References cited:
• **Section EI, Week 9033, Derwent Publications
Ltd., London, GB; Class S02, AN 90- 247341 &
DD,A,276 708 ( VEB WASSERV ABWAS C ) 7
March 1990.**
• **PATENT ABSTRACTS OF JAPAN vol. 4, no. 62
(P-10)9 May 1980 & JP,A,55 031 907 ( TOSHIBA
CORP ) 6 March 1980.**
• **Section EI, Week 8344, Derwent Publications
Ltd., London, GB; Class X25, AN 83- 807089 &
SU,A,989 151 (DON POLY) 18 January 1983.**

## Description

The present invention relates to testing of pumps and in particular to determining the efficiency of water pumps, particularly water pumps for use with sumps.

A known technique for measuring efficiency E of a water pump involves measuring the time T taken for a known volume V of water to be pumped by the pump, the power P, such as electrical power, supplied to the pump during this time and the pump output pressure p, i.e. the pumping head. The efficiency is then determined from the following equation:

$$E(\%) = \frac{V(m^3)/T(s) \; x \; p \; (Nm^{-2})}{P(W)} \; x \; 100\%$$

The electrical power can be measured either directly using a wattmeter or simply by measuring the current passing through the motor and multiplying this by the voltage applied to the pump and a further factor, $\sqrt{3} \cos \phi$, where $\cos \phi$ is the motor power factor, typically 0.9.

The main disadvantage of this method of measuring pump efficiency resides in the time taken to effect a measurement; indeed, it can take between one and two man-days to test a single pump in this manner, since, although the time taken for the water to be pumped between the two levels is typically at most a few hours, such a test must be repeated several times and the measurements averaged in order for the results to be meaningful.

In accordance with a first aspect of the present invention there is provided a method of determining the pumping efficiency of a water pump which is powered for a time interval dependent on the flow rate through the pump, the method comprising: sensing the power applied to the pump and generating power data representative thereof; sensing the water pressure at the pump outlet and generating pressure data representative thereof; characterised by automatically storing said data at predetermined intervals for subsequent processing thereof during both said time interval for which the power is applied and a time interval for which the power is not applied, such that the flow rate and hence the pumping efficiency of the pump is derivable from said data during said subsequent processing.

In accordance with a second aspect of the present invention there is provided a system for determining the pumping efficiency of a water pump which is powered during a time interval dependent on the flow rate through the pump the system comprising: a power sensor for sensing the power applied to the pump and means for generating power data representative thereof; a pressure sensor for sensing the water pressure at the pump outlet and means for generating pressure data representative thereof; characterised in that the system further comprises: recording means for automatically recording said data at predetermined intervals in a storage means for subsequent processing thereof during both said time interval for which the power is applied and a time interval for which the power is not applied, such that the flow rate through the pump and hence the pumping efficiency of the pump is derivable from said data during said subsequent processing.

By automatically storing the data, such an arrangement is advantageous in that the data can be collected and stored while the pumping station is unattended.

By storing the data in a portable storage device, such as a credit card-sized data storage card, the subsequent processing can be effected centrally, at a location remote from the pump.

In the case of electrical pumps, the power supplied is preferably measured using an electrical current transducer, and the outlet water pressure can be measured by a pressure transducer, each transducer producing an analog output voltage which can conveniently subsequently be converted into a frequency signal. The number of pulses in the respective frequency signals occurring within a predetermined time interval can then be counted, and the count value stored in the data storage device for subsequent processing.

In systems involving the pumping of water from a sump, wherein the pump is automatically energised when the water level reaches a predetermined value and wherein the pump is de-energised when the pump has caused the water level to fall to a different predetermined level, the water flow can be determined from the output of the current transducer by sensing the time interval between energisation and de-energisation of the electrical pump. In this case, since water is continuously flowing into the sump, it is necessary to determine this input flow rate when the pump is de-energised, and to use this value to correct the determined output flow rate.

In this way, the entire pump testing procedure is automated and, in the preferred embodiment, requires merely the insertion of a data storage card in a recording device for the information to be stored. The data can be subsequently processed at a remote location for the pumping efficiency to be determined. The value of the pumping efficiency could, for example, be representative of a minimum, a maximum or an average pumping efficiency occurring within a given period.

In order that the invention will be more clearly understood, a preferred embodiment will now be described with reference to the accompanying drawings, wherein:

Figure 1 shows a schematic representation of data logging apparatus in accordance with a preferred embodiment of the present invention; and
Figure 2 shows a schematic representation of data reading and processing apparatus in accordance with a preferred embodiment of the present invention.

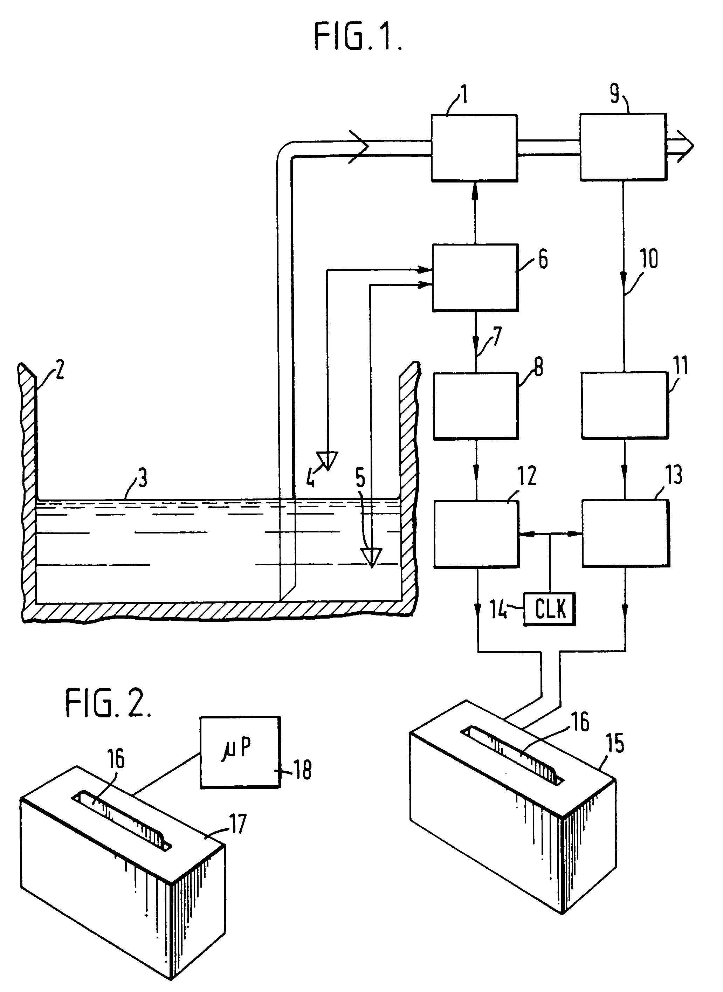

Referring now to Figure 1, an electrically powered water pump 1 is connected by suitable piping to a sump 2 containing water 3. Water level sensors 4 and 5 detect when the water level in the sump reaches upper and lower predetermined levels respectively. The output from the water level sensors 4,5 is supplied to a pump control circuit 6 which is arranged to energise the pump when the water reaches the upper level and to de-energise the pump when the water reaches the lower level. The pump control circuit 6 is arranged to produce an output voltage 7 proportional to the electric current supplied to the pump 1. This output voltage is fed to a voltage-to-frequency converter circuit 8. The output pressure of the water pump 1 is measured by a pressure transducer 9 which produces an output voltage 10 which is fed to a further voltage-to-frequency converter 11. The outputs of the voltage-to-frequency converters 8,11 have respective frequencies which are proportional to the electric current supplied to the pump and the output pressure of the pump.

These output frequency signals are fed via frequency dividers (not shown) to respective counters 12,13 which are controlled by a clock signal from a clock 14 so as to count the pulses of the respective input frequency signals occurring within a predetermined time. The clock signal thus serves to cause the counters 12,13 to start and to stop counting the pulses of the respective input frequency signals. At the end of each predetermined period, which is typically 15 seconds, the count values produced by the respective counting circuits 12,13 are supplied to a data recording circuit 15 which is arranged to store the count values on a semiconductor data storage card 16 which has been inserted in a slot in the data recording device 15. The frequency converter circuits 8, 11 and the associated counting circuits 12, 13 thus effectively constitute respective analog-to-digital converters.

The data storage card will thus have data stored therein representing electrical current supplied to the water pump 1 and the output pressure of the pump for each of a series of 15-second intervals. When the water level is below the lower level, as sensed by lower level sensor 5, the pump is automatically de-energised, and so the electric current will be zero. The data stored on the card includes data not only for the time when the pump is operative but also for the periods between energisation of the pump. In this way, the water flow into the sump can be determined.

In order to determine the pumping efficiency of the water pump, the card 16 is removed from the data recording device 15 and inserted in a separate data reading device 17, as shown in Figure 2, the data reading device being connected to a microprocessor 18, such as a personal computer. The microprocessor 18 is arranged to analyse the counts stored in the card in respect of both electric current and output pressure in order to derive a value of the pumping efficiency. The flow of water through the pump is required to be determined, as can be seen from the efficiency equation hereinabove. This is determined by measuring the difference in height between the two water level sensors 4,5 and knowing the average horizontal cross-sectional area of the sump 2 in order to obtain a measure of the volume of water and measuring the time taken for this volume of water to be pumped. The latter is determined by the microprocessor 18 counting the number of consecutive non-zero count values occurring between zero count values and multiplying by the time associated with each count value, i.e. 15 seconds. Thus, for example, if two pairs of zero count values stored on the data storage card 16 are separated by 120 pairs of non-zero count values, then the relevant time for the volume of water to be pumped will be 120 x 15 seconds which equals thirty minutes (1800 seconds) . To this value of flow is added, as a correction, the value of input flow obtained by dividing the same volume by the time for which the pump is de-energised.

Clearly, although the circuitry shown connected to the sump 2 and pump 1 in Figure 1 can be conveniently located permanently at every pumping station where it is desired to measure the efficiency of the pump, it is not necessary to provide a separate data reading device and microprocessor at each pumping station, since the cards 16 can simply be collected after a desired testing period and sent to a single centre for analysis.

Although in the above embodiment, the electric current is sensed in order to derive a value for the electric power supplied to the pump, it would of course be possible to provide a power transducer which generates a value indicative of the electric power direct. In this case, a knowledge of the power factor and voltage is unnecessary.

## Claims

1. A method of determining the pumping efficiency of a water pump (1) which is powered for a time interval dependent on the flow rate through the pump (1), the method comprising:

   sensing the power applied to the pump (1) and generating power data representative thereof;
   sensing the water pressure at the pump outlet and generating pressure data representative thereof;

   characterised by
   automatically storing said data at predetermined intervals for subsequent processing thereof during both said time interval for which the power is applied and a time interval for which the power is not applied, such that the flow rate and hence the pumping efficiency of the pump (1) is derivable from said data during said subsequent processing.

2. A method as claimed in claim 1, further comprising performing said subsequent processing.

3. A method as claimed in claim 2, wherein said subsequent processing includes determining said flow rate from the power data.

4. A method as claimed in claim 2 or 3, wherein the processing step includes deriving the value of said time interval from the number of consecutive values of said data representing the pump (1) being energized, and thereby determining the flow rate through the pump (1) and hence the pumping efficiency.

5. A method as claimed in any preceding claim, wherein said power and pressure data represent respectively the power and water pressure over each of said predetermined intervals.

6. A system for determining the pumping efficiency of a water pump (1) which is powered during a time interval dependent on the flow rate through the pump (1) the system comprising:

    a power sensor (6) for sensing the power applied to the pump and means (8, 12) for generating power data representative thereof;
    a pressure sensor (9) for sensing the water pressure at the pump outlet and means (11, 13) for generating pressure data representative thereof;

    characterised in that the system further comprises:
    recording means (14, 15) for automatically recording said data at predetermined intervals in a storage means (16) for subsequent processing thereof during both said time interval for which the power is applied and a time interval for which the power is not applied, such that the flow rate through the pump (1) and hence the pumping efficiency of the pump (1) is derivable from said data during said subsequent processing.

7. A system as claimed in claim 6, wherein the pump (1) is electrically powered, the power sensor (6) comprising means for measuring the electric current passing through the pump (1).

8. A system as claimed in claim 6 or claim 7, wherein the storage means (16) is removable.

9. A system as claimed in any one of claims 6 to 8, wherein the storage means (16) comprises a data storage card.

10. A system as claimed in claim 9, wherein the data storage card (16) is credit card-sized.

11. A system as claimed in any one of claims 6 to 10, wherein the power and pressure data generating means (8, 12, 11, 13) comprise respective analog-to-digital converters.

12. A system as claimed in any one of claims 6 to 11, wherein the power and pressure sensors (6, 9) are arranged to generate respective output voltages (7, 10) and the power and pressure data generating means (8, 12, 11, 13) comprise respective voltage-to-frequency converters (8, 11).

13. A system as claimed in claimed in claim 12, wherein the power and pressure data generating means (8, 12, 11, 13) further comprise respective counting means (12, 13) for counting pulses produced by the voltage-to-frequency converters (8, 11).

14. A system as claimed in any one of claims 6 to 13, further comprising processing means (18) for performing said subsequent processing of said data.

15. A system as claimed in claim 14, wherein the processing means (18) is arranged to process said data to derive the value of said time interval from the number of consecutive values of said data representing the pump (1) being energized and thereby to determine the flow rate through the pump (1) and hence the pumping efficiency thereof.

16. A system as claimed in claim 14 or 15, wherein the processing means (18) is remotely located with respect to the pump (1) and sensors (6, 9).

17. A system as claimed in any one of claims 14 to 16, wherein said processing means (18) is arranged to generate a value representative of a minimum pumping efficiency occurring within a given period.

18. A system as claimed in any one of claims 14 to 17, wherein said processing means (18) is arranged to generate a value representative of a maximum pumping efficiency occurring within a given period.

19. A system as claimed in any one of claims 14 to 18, wherein said processing means (18) is arranged to generate a value representative of an average pumping efficiency occurring within a given period.

20. A system as claimed in any one of claims 6 to 19, wherein said power and pressure data generating means (8, 12, 11, 13) are arranged to generate respectively said power and pressure data representing respectively the power and water pressure over each of said predetermined intervals.

**Patentansprüche**

1. Verfahren zur Bestimmung des Pumpwirkungsgrades einer Wasserpumpe (1), die während eines Zeitintervalls in Abhängigkeit von der Strömungsrate durch die Pumpe (1) mit Energie versorgt wird, wobei das Verfahren darin besteht, daß:

die der Pumpe (1) zugeführte Leistung ermittelt und hierfür charakteristische Leistungsdaten erzeugt werden;

der Wasserdruck am Pumpenauslaß ermittelt und hierfür charakteristische Druckdaten erzeugt werden,

**dadurch gekennzeichnet, daß**
die Daten in vorbestimmten Intervallen zur nachfolgenden Verarbeitung während des Zeitintervalles, während dem die Leistung zugeführt wird, und eines Zeitintervalls, während dem keine Leistung zugeführt wird, automatisch gespeichert werden, so daß die Strömungsrate und damit der Pumpwirkungsgrad der Pumpe (1) aus dem Datenwert der nachfolgenden Verarbeitung ableitbar ist.

2. Verfahren nach Anspruch 1,
**dadurch gekennzeichnet, daß**
die nachfolgende Verarbeitung durchgeführt wird.

3. Verfahren nach Anspruch 2,
**dadurch gekennzeichnet, daß**
die nachfolgende Verarbeitung die Bestimmung der Strömungsrate aus den Leistungsdaten umfaßt.

4. Verfahren nach Anspruch 2 oder 3,
**dadurch gekennzeichnet, daß**
der Verarbeitungsschritt die Ableitung der Größe des Zeitintervalls aus der Anzahl aufeinanderfolgender Werte der Daten, die dafür charakteristisch sind, wenn die Pumpe (1) erregt wird, umfaßt, und daß dadurch die Strömungsrate durch die Pumpe (1) und damit der Pumpwirkungsgrad bestimmt wird.

5. Verfahren nach einem der vorhergehenden Ansprüche,
**dadurch gekennzeichnet, daß**
die Leistungs- bzw. Druckdaten die Leistung und den Wasserdruck während jedes der vorbestimmten Intervalle darstellen.

6. System zur Bestimmung des Pumpwirkungsgrades einer Wasserpumpe (1), die während eines Zeitintervalls in Abhängigkeit von der Strömungsrate durch die Pumpe (1) mit Energie versorgt wird, wobei das System umfaßt:

einen Leistungssensor (6) zur Ermittlung der der Pumpe zugeführten Leistung, und eine Einrichtung (8, 12) zur Erzeugung von hierfür charakteristischen Leistungsdaten;

einen Drucksensor (9) zur Ermittlung des Wasserdrucks am Pumpenauslaß, und eine Einrichtung (11, 13) zur Erzeugung von hierfür charakteristischen Druckdaten,

**dadurch gekennzeichnet, daß**
das System weiterhin aufweist:
ein Aufzeichnungsgerät (14, 15) zum automatischen Aufzeichnen der Daten in vorbestimmten Intervallen in einem Speichergerät (16) zur nachfolgenden Verarbeitung dieser während des Zeitintervalls, während dem Leistung zugeführt wird, und eines Zeitintervalls, während dem keine Leistung zugeführt wird, so daß die Strömungsrate durch die Pumpe (1) und damit der Pumpwirkungsgrad der Pumpe (1) aus den Daten während der nachfolgenden Verarbeitung ableitbar ist.

7. System nach Anspruch 6,
**dadurch gekennzeichnet, daß**
die Pumpe (1) elektrisch mit Energie versorgt wird, und daß der Pumpensensor (6) eine Einrichtung zum Messen des durch die Pumpe (1) fließenden elektrischen Stroms umfaßt.

8. System nach Anspruch 6 oder 7,
**dadurch gekennzeichnet, daß**
das Speichergerät (16) abnehmbar ist.

9. System nach einem der Ansprüche 6 - 8,
**dadurch gekennzeichnet, daß**
das Speichergerät eine Datenspeicherkarte umfaßt.

10. System nach Anspruch 9,
**dadurch gekennzeichnet, daß**
die Datenspeicherkarte (16) Kreditkartengröße hat.

11. System nach einem der Ansprüche 6 - 10,
**dadurch gekennzeichnet, daß**
die Leistungs- und Druckdatenerzeugungseinrichtungen (8, 12, 11, 13) jeweils A/D-Wandler aufweisen.

12. Nach einem der Ansprüche 6 - 11,
**dadurch gekennzeichnet, daß**
die Leistungs- und Drucksensoren (6, 9) so ausgebildet sind, daß sie jeweilige Ausgangsspannungen (7, 10) erzeugen, und die Leistungs- und Druckdatenerzeugungseinrichtungen (8, 10, 12, 11, 13) jeweilige A/D-Wandler (8, 11) umfassen.

13. System nach Anspruch 12,
**dadurch gekennzeichnet, daß**
die Leistungs- und Druckdatenerzeugungseinrichtungen (8, 12, 11, 13) Zähleinrichtungen (12, 13) zum Zählen der von den A/D-Wandlern (8, 11) erzeugten Impulse umfassen.

14. System nach einem der Ansprüche 6 - 13,
**gekennzeichnet durch**
eine Verarbeitungseinrichtung (18) zur Durchführung der nachfolgenden Datenverarbeitung.

15. System nach Anspruch 14,
**dadurch gekennzeichnet, daß**
die Verarbeitungseinrichtung (18) so ausgebildet ist, daß sie die Daten verarbeitet, um die Größe des Zeitintervalls aus der Anzahl aufeinanderfolgender Werte der Daten abzuleiten, die dafür charakteristisch ist, wenn die Pumpe (1) erregt ist, und dadurch die Strömungsrate durch die Pumpe (1) und damit daraus den Pumpenwirkungsgrad zu bestimmen.

16. System nach Anspruch 14 oder 15
**dadurch gekennzeichnet, daß**
die Verarbeitungseinrichtung (18) bzgl. der Pumpe (1) und der Sensoren (6, 9) entfernt angeordnet ist.

17. System nach einem der Ansprüche 14 - 16,
**dadurch gekennzeichnet, daß**
die Verarbeitungseinrichtung (18) so ausgebildet ist, daß sie eine für den minimalen Pumpwirkungsgrad charakteristischen Wert erzeugt, der während einer bestimmten Periode auftritt.

18. System nach einem der Ansprüche 14 - 17,
**dadurch gekennzeichnet, daß**
die Verarbeitungseinrichtung (18) so ausgebildet ist, daß sie einen für den maximalen Pumpwirkungsgrad charakteristischen Wert erzeugt, der während einer bestimmten Periode auftritt.

19. System nach einem der Ansprüche 14 - 18,
**dadurch gekennzeichnet, daß**
die Verarbeitungseinrichtung (18) so ausgebildet ist, daß sie einen für den mittleren Pumpwirkungsgrad charakteristischen Wert erzeugt, der während einer bestimmten Periode auftritt.

20. System nach einem der Ansprüche 6 - 19,
**dadurch gekennzeichnet, daß**
die Leistungs- und Druckdatenerzeugungseinrichtungen (8, 12, 11, 13) so ausgebildet sind, daß sie jeweils die Leistungs- und Druckdaten erzeugen, die jeweils die Leistung und die Wasserdrücke während der vorbestimmten Intervalle darstellen.

**Revendications**

1. Procédé de détermination de l'efficacité de pompage d'une pompe à eau (1) mise en fonctionnement sur un intervalle de temps qui dépend du débit à travers la pompe (1), le procédé comprenant :

- la détection de la puissance appliquée à la pompe (1) et la production d'une donnée de puissance représentative de celle-ci,
- la détection de la pression de l'eau à la sortie de la pompe et la production d'une donnée de pression représentative de celle-ci,

caractérisé par une mémorisation automatique desdites données à intervalles prédéterminés en vue de leur traitement ultérieur à la fois pendant ledit intervalle de temps pendant lequel une puissance est appliquée et pendant un intervalle de temps pendant lequel aucune puissance n'est appliquée, de sorte que le débit, et donc l'efficacité de pompage de la pompe (1), peut être déduit desdites données pendant ledit traitement ultérieur.

2. Procédé selon la revendication 1, comprenant en outre la réalisation dudit traitement ultérieur.

3. Procédé selon la revendication 2, dans lequel ledit traitement ultérieur comprend une détermination dudit débit à partir des données de puissance.

4. Procédé selon la revendication 2 ou 3, dans lequel l'étape de traitement comprend une déduction de la valeur dudit intervalle de temps à partir du nombre de valeurs consécutives desdites données qui représentent le fait que la pompe (1) est mise en fonctionnement et la détermination, de ce fait, du débit à travers la pompe (1) et donc de l'efficacité de pompage.

5. Procédé selon l'une quelconque des précédentes revendications, dans lequel lesdites données de puissance et de pression représentent respectivement la puissance et la pression de l'eau sur chacun desdits intervalles prédéterminés.

6. Dispositif de détermination de l'efficacité de pompage d'une pompe à eau (1) qui est mise en fonctionnement pendant un intervalle de temps qui dépend du débit à travers la pompe (1), ledit dispositif comprenant :

- un détecteur de puissance (6) servant à détecter la puissance appliquée à la pompe et des moyens (8, 12) servant à produire des données de puissance représentatives de celle-ci,
- un détecteur de pression (9) servant à détecter la pression de l'eau à la sortie de la pompe et des moyens (11, 13) servant à produire des données de pression représentatives de celle-ci,

caractérisé en ce que le dispositif comprend en outre des moyens d'enregistrement (14, 15) pour enregistrer automatiquement lesdites données à intervalles prédéterminés dans un moyen de mémorisation (16) en vue de leur traitement ultérieur, à la fois pendant ledit intervalle de temps pendant lequel une puissance est appliquée et pendant un intervalle de temps pendant lequel aucune puissance n'est appliquée, de sorte que le débit à travers la pompe (1), et donc l'efficacité de pompage de la pompe (1), peut être déduit desdites données pendant ledit traitement ultérieur.

7. Dispositif selon la revendication 6, dans lequel la pompe (1) fonctionne à l'énergie électrique, le détecteur de puissance (6) comprenant un moyen qui mesure le courant électrique traversant la pompe (1).

8. Dispositif selon la revendication 6 ou la revendication 7, dans lequel le moyen de mémorisation (16) est amovible.

9. Dispositif selon l'une quelconque des revendications 6 à 8, dans lequel le moyen de mémorisation (16) comprend une carte de mémorisation de données.

10. Dispositif selon la revendication 9, dans lequel la carte (16) de mémorisation de données a la taille d'une carte de crédit.

11. Dispositif selon l'une quelconque des revendications 6 à 10, dans lequel les moyens (8, 12, 11, 13) de production de données de puissance et de pression comprennent des convertisseurs analogique/numérique respectifs.

12. Dispositif selon l'une quelconque des revendications 6 à 11, dans lequel les détecteurs (6, 9) de puissance et de pression sont conçus pour produire des tensions de sortie respectives (7, 10) et les moyens (8, 12, 11, 13) de production de données de puissance et de pression comprennent des convertisseurs tension/fréquence respectifs (8, 11).

13. Dispositif selon la revendication 12, dans lequel les moyens (8, 12, 11, 13) de production de données de puissance et de pression comprennent en outre des moyens de comptage respectifs (12, 13) servant à compter des impulsions produites par les convertisseurs tension/fréquence (8, 11).

14. Dispositif selon l'une quelconque des revendications 6 à 13, comprenant en outre un moyen de traitement (18) qui effectue ledit traitement ultérieur desdites données.

15. Dispositif selon la revendication 14, dans lequel le moyen de traitement (18) est conçu pour traiter lesdites données afin de déduire la valeur dudit intervalle de temps à partir du nombre de valeurs consécutives desdites données qui représentent le fait que la pompe (1) est mise en fonctionnement et de déterminer par là le débit à travers la pompe (1), et donc son efficacité de pompage.

16. Dispositif selon la revendication 14 ou 15. dans lequel le moyen de traitement (18) est placé à distance de la pompe (1) et des détecteurs (6, 9).

17. Dispositif selon l'une quelconque des revendications 14 à 16, dans lequel ledit moyen de traitement (18) est conçu pour produire une valeur représentative d'une efficacité de pompage minimale qui se produit sur une période donnée.

18. Dispositif selon l'une quelconque des revendications 14 à 17, dans lequel ledit moyen de traitement (18) est conçu pour produire une valeur représentative d'une efficacité de pompage maximale qui se produit sur une période donnée.

19. Dispositif selon l'une quelconque des revendications 14 à 18, dans lequel ledit moyen de traitement (18) est conçu pour produire une valeur représentative d'une efficacité de pompage moyenne qui se produit sur une période donnée.

20. Dispositif selon l'une quelconque des revendications 6 à 19, dans lequel lesdits moyens (8, 12, 11, 13) de production de données de puissance et de pression sont conçus pour produire respectivement lesdites données de puissance et de pression qui représentent respectivement la puissance et la pression de l'eau sur chacun desdits intervalles prédéterminés.

# FIG.1.

# FIG.2.